Europäisches Patentamt

European Patent Office

Office européen des brevets

(11) Veröffentlichungsnummer : **0 085 782**
**B1**

(12) **EUROPÄISCHE PATENTSCHRIFT**

(45) Veröffentlichungstag der Patentschrift :
20.08.86

(21) Anmeldenummer : 82111908.8

(22) Anmeldetag : 22.12.82

(51) Int. Cl.⁴ : **B 23 B 31/16**

(54) **Spannfutter.**

(30) Priorität : **10.02.82 DE 3204529**

(43) Veröffentlichungstag der Anmeldung :
**17.08.83 Patentblatt 83/33**

(45) Bekanntmachung des Hinweises auf die Patenterteilung : **20.08.86 Patentblatt 86/34**

(84) Benannte Vertragsstaaten :
**DE FR GB**

(56) Entgegenhaltungen :
**EP-A- 0 013 908**
**DE-B- 1 215 470**
**DE-B- 1 800 271**
**FR-A- 1 263 566**
**FR-A- 2 010 914**
**GB-A- 1 056 997**
**GB-A- 2 035 178**

(73) Patentinhaber : **SMW Schneider & Weisshaupt GmbH**
**Wiesentalstrasse 28**
**D-7996 Meckenbeuren (DE)**

(72) Erfinder : **Hiestand, Karl**
**Mühlweg 2**
**D-7798 Pfullendorf (DE)**

(74) Vertreter : **Engelhardt, Guido, Dipl.-Ing.**
**Montafonstrasse 35 Postfach 1350**
**D-7990 Friedrichshafen 1 (DE)**

**Beschreibung**

Die Erfindung bezieht sich auf ein Spannfutter für Drehmaschinen oder ähnliche Werkzeugmaschinen mit einem über eine Ausgleichseinrichtung zur Anpassung an ungleichmäßige Werkstücke betätigbaren Ausgleichsspannbackensatz und einem unabhängig davon betätigbaren Zentrierspannbackensatz, dessen Spannbacken in axialem Abstand von den Ausgleichsspannbacken an der Außenfläche des einzuspannenden Werkstückes angreifen und aus dem Zentrierbereich zurückziehbar sind.

Ein Spannfutter dieser Art ist durch die DE-PS 18 00 271 bekannt. Die Zentrierbacken, an deren spannseitigen Enden auf das einzuspannende Werkstück einwirkende Backen lösbar angebracht sind, sind hierbei durch Stangen gebildet, die in zylindrischen Bohrungen des Spannfutterkörpers gleitend geführt sind. Da jedoch die Achsen dieser Bohrungen zum spannseitigen Ende hin konvergierend geneigt sind, werden die auf das einzuspannende Werkstück einwirkenden Backen auch in axialer Richtung verstellt. Das Werkstück ist somit einer zusätzlichen axial gerichteten Beanspruchung unterworfen. Dies führt mitunter zu einer Axialverschiebung des Werkstückes, so daß eine exakte Einspannlage oftmals nicht gegeben ist. Außerdem baut diese Spannfutterkonstruktion, bedingt durch die stangenförmig ausgebildeten zur Längsachse des Spannfutters geneigt verlaufenden Zentrierbacken in axialer und auch in radialer Richtung sehr groß, der Spannbereich ist aber, da die radiale Zustellung der Backen von der Schrägstellung der Zentrierbacken abhängig ist, gering. Des weiteren ist von Nachteil, daß bei unterschiedlichen Werkstückdurchmessern die Backen in unterschiedlichen axialen Abständen von der Einspannstelle des Spannbackensatzes zur Anlage kommen. Eine vielseitige Verwendbarkeit dieses aufwendigen Spannfutters insbesondere zur Automatisierung von Spannvorgängen ist daher nicht gegeben.

Aufgabe der Erfindung ist es demnach, ein Spannfutter der vorgenannten Gattung zu schaffen, mittels dem ein Werkstück an der zu bearbeitenden Stelle, und zwar unabhängig von dem jeweiligen Werkstückdurchmesser, zuverlässig zentrisch einzuspannen ist, dessen Spannbereich ohne weiteres groß gewählt werden kann und dessen Zentrierspannbacken während des Spannvorganges achssenkrecht zu dem Werkstück verstellt werden, so daß axiale Verschiebungen der Werkstücke vermieden werden und deren zentrische Einspannungen in stets gleichem wählbaren Abstand von dem Einspannbereich des Spannbackensatzes erfolgt. Außerdem soll eine große Anpaßbarkeit an die jeweils an einer bestimmten Stelle zentrisch zu bearbeitenden, aber ungleichmäßigen und somit während des Bearbeitungsvorganges außermittig zu spannenden Werkstücke gegeben sein. Vor allem aber soll erreicht werden, daß die zentrische und ausgleichende Spannung eines Werkstückes, um z. B. die Endkrümmungen von für Bohrgestänge vorgesehener Rohre bei deren Bearbeitung auszugleichen, in kurzer Zeit auch folgegesteuert vorzunehmen ist, so daß die Spannvorgänge automatisiert werden können und das Spannfutter in den Arbeitsablauf einer Werkzeugmaschine mit integriert werden kann. Der Bauaufwand, mittels dem dies zu bewerkstelligen ist, soll gering gehalten werden, dennoch sollen bei vielseitiger Verwendungsweise stets eine hohe Betriebssicherheit und eine lange Lebensdauer gegeben sein.

Gemäß der Erfindung wird dies bei einem Spannfutter der vorgenannten Art dadurch erreicht, daß die Spannbacken des Zentrierspannbackensatzes unmittelbar oder über Grundbacken jeweils senkrecht zur Längsachse des Spannfutters verstellbar in einem Spannkopf geführt sind, der in einer in den Futterkörper eingearbeiteten Ausnehmung axial begrenzt verschiebbar gehalten ist, daß die Zentrierspannbacken oder die Grundbacken und die diesen zugeordneten Spannköpfe über ein als Stößel ausgebildetes achsparallel zur Längsachse des Spannfutters angeordnetes Verbindungsglied mit einem gemeinsamen Stellglied koppelbar sind und daß die Verbindungsglieder in dem in die Zentrierspannbacken oder die Grundbacken eingreifenden Bereich mit in Achsrichtung geneigten Keilflächen versehen sind, mittels denen die axiale Verstellbewegung des Stellgliedes bei in der vorderen Endstellung arretierten Spannköpfen über an den Zentrierspannbacken oder den Grundbacken angebrachte Gegenflächen in gemeinsame radial gerichtete Zustellbewegungen umlenkbar ist.

Zweckmäßig ist es hierbei, wenn die Verbindungsglieder die diesen zugeordneten Spannköpfe jeweils in einer in diese eingearbeiteten zentrischen Ausnehmung durchgreifen. Auf diese Weise ist eine raumsparende Anordnung geschaffen.

Die zur radialen Verstellung der Zentrierspannbacken oder der Grundbacken vorgesehenen Keilflächen können in einfacher Ausgestaltung jeweils durch eine an dem diesen zugekehrten Ende der Verbindungsglieder angebrachte in Achsrichtung geneigt verlaufende Nase gebildet werden, die in eine in die Zentrierspannbacken oder die Grundbacken eingearbeitete zugeordnete Nut eingreifen.

Um eine Bearbeitung auf wirtschaftliche Weise vornehmen zu können, ist es ferner angebracht, die Spannköpfe und die in diese eingesetzten Grundbacken zylinderförmig mit vorzugsweise gleichen Außendurchmessern und die diese aufnehmenden Ausnehmungen als zylindrische Bohrungen auszubilden.

Zur verdrehfesten Halterung der Spannköpfe können diese mit vorzugsweise jeweils zwei diametral einander gegenüberliegend angeordneten achsparallel verlaufenden Führungsflächen versehen sein, die an an dem Futterkörper angebrachten Gegenflächen anliegen.

Der Verstellweg der Spannköpfe ist zumindest in Zustellrichtung durch einen an dem Futterkörper angebrachten Anschlag zu begrenzen. Dadurch sind die Spannköpfe arretiert, so daß die weitere Verstellbewegung des Verstellgliedes jetzt mittels der Keil- und Gegenflächen in eine radiale Zustellbewegung der Zentrierspannbacken oder der Grundbacken umgelenkt wird.

Die die Zustellbewegung der Spannköpfe begrenzenden Anschläge können durch auf der Stirnseite des Spannfutters angeordnete die die Spannköpfe aufnehmenden Ausnehmungen ein- oder beidseitig teilweise abdeckende vorzugsweise axial verstellbare Anschlagleisten oder Stellschrauben gebildet werden, mit denen an den Spannköpfen beispielsweise durch Absätze gebildete Anschlagflächen zusammenwirken, wobei die mit den Führungsflächen der Spannköpfe zusammenwirkenden Gegenflächen ebenfalls durch die Anschlagleisten gebildet werden können.

Die die Rückstellbewegung der Spannköpfe begrenzenden Anschläge können jeweils durch einen in der diese aufnehmenden Ausnehmung vorgesehenen Absatz gebildet werden, mit dem der im Längsschnitt vorzugsweise T-förmig ausgebildete Spannkopf mit einer Anschlagfläche zusammenwirkt.

Zur Begrenzung der Rückstellbewegung der Zentrierspannbacken ist es des weiteren angebracht, die Verbindungsglieder jeweils mit einer in Achsrichtung verlaufenden Freisparung und den zugeordneten Spannkopf mit einem Anschlagstift zu versehen, der in die Freisparung eingreift. Dadurch wird verhindert, daß bei der Rückstellbewegung die Verbindungsglieder außer Eingriff mit den Zentrierspannbacken oder den Grundbacken gelangen.

Um eine Vormontage von Spannköpfen und Verbindungsgliedern zu ermöglichen und die bei einer Axialverstellung der Grundbacken in den die Spannköpfe aufnehmenden Ausnehmungen auftretenden Reibungskräfte gering zu halten, ist es des weiteren zweckmäßig, die Verbindungsglieder jeweils über eine vorzugsweise vorgespannte Feder mit dem zugeordneten Spannkopf zu verbinden. Die Feder kann hierbei jeweils in einer in die Spannköpfe eingearbeiteten ringnutförmigen Freisparung eingesetzt und an diesen und den Verbindungsgliedern abgestützt werden.

Als Stellglied kann in einfacher Ausgestaltung ein beidseitig von Druckmittel beaufschlagbarer axial verschiebbarer in dem Futterkörper angeordneter Stellkolben vorgesehen werden, wobei dieses als Ringkolben mit zumindest einem von diesem im inneren oder äußeren Bereich axial abstehenden rohrförmigen Ansatz ausgebildet sein kann, der in dem Futterkörper geführt ist.

Das gemäß der Erfindung ausgebildete Spannfutter ermöglicht nicht nur eine rasche und zuverlässige Zentrierung des zu bearbeitenden Bereichs ungleichmäßiger Werkstücke, sondern es ist auch gewährleistet, daß die Zentrierspannbacken während der Spannbewegung achssenkrecht zur Längsachse des Spannfutters verstellt werden und stets in einem wählbaren Abstand von der Einspannstelle der Ausgleichsbacken an dem Werkstück angreifen. Werden nämlich die Zentrierspannbacken jeweils in einem in dem Futterkörper axial verstellbar geführten und durch ein gemeinsames Stellglied betätigbaren Spannkopf eingesetzt, so ist es möglich, ein Werkstück an der zu bearbeitenden Stelle zuverlässig zentrisch zu spannen und diese Einspannung aufzuheben, sobald mittels der Ausgleichseinrichtung, die in unterschiedlicher Weise gestaltet sein kann, die Ausgleichsspannbacken an dem Werkstück spannend anlegen. Bei der zentrischen Spannung führen die Spannkräfte zunächst eine Axialbewegung um einen bestimmten Verstellweg aus und werden in dieser Lage arretiert, so daß die weitere Verstellbewegung des Stellgliedes über die an den Verbindungsgliedern angebrachten Keilflächen anschließend in eine radiale Zustellbewegung der Zentrierspannbacken umgelenkt werden. Auf diese Weise ist sichergestellt, daß unabhängig von dem jeweiligen Durchmesser des zu bearbeitenden Werkstückes dieses stets im gleichen Abstand zu dem Ausgleichsspannbackensatz eingespannt wird.

Des weiteren kann der Verstellbereich der Zentrierspannbacken, je nach Neigung und Länge der Keilflächen und der mit diesen zusammenwirkenden Gegenflächen groß gewählt werden, so daß ohne Schwierigkeiten auch Werkstücke unterschiedlichen Durchmessers sicher einzuspannen sind. Und da die Zentrierspannbacken stets senkrecht zur Längsachse des Werkstückes auf dieses einwirken, wird dieses beim Einspannvorgang axial nicht beansprucht und somit auch nicht verschoben, Einspannungenauigkeiten müssen demnach nicht in Kauf genommen werden. Von besonderem Vorteil ist des weiteren, daß die zentrische Einspannung und die nachfolgende außermittige Einspannung eines ungleichmäßigen Werkstückes in kurzer Zeit vorzunehmen sind und daß die einzelnen Spannvorgänge folgegesteuert werden können. Das gemäß der Erfindung ausgebildete Spannfutter kann somit in den Arbeitsablauf einer Werkzeugmaschine integriert werden. Und da der Bau- und Fertigungsaufwand gering ist, ist des weiteren auch eine wirtschaftliche Herstellung gegeben.

In der Zeichnung ist ein Ausführungsbeispiel des gemäß der Erfindung ausgebildeten mit einem Ausgleichsspannbackensatz und einem Zentrierspannbackensatz versehenes Spannfutter dargestellt und nachfolgend im einzelnen erläutert. Hierbei zeigen:

Figur 1 das an einer Werkzeugmaschine angebaute Spannfutter bei der zentrischen Aufnahme eines Werkstückes, im Axialschnitt,

Figur 2 das Spannfutter nach Fig. 1 bei der Halterung des Werkstückes mittels des Ausgleichsspannbackensatzes ebenfalls im Axialschnitt,

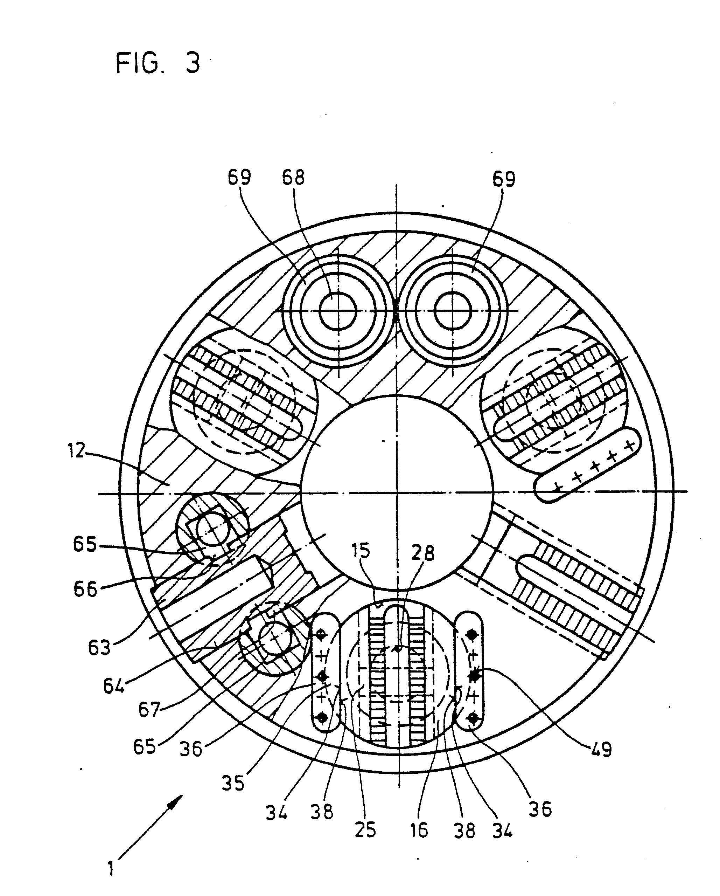

Figur 3 das Spannfutter nach Fig. 1 in Voderansicht und in teilweise unterschiedlichen achssenkrechten Schnitten und

Figur 4 einen Längsschnitt durch einen der im Futterkörper verschiebbar geführten Spannköpfe.

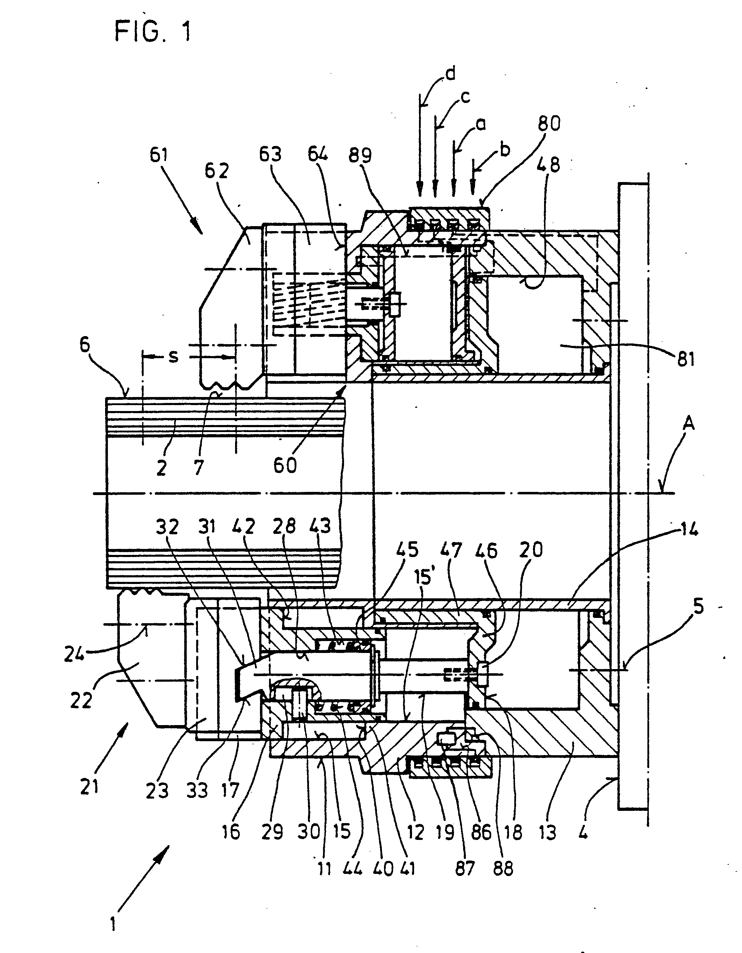

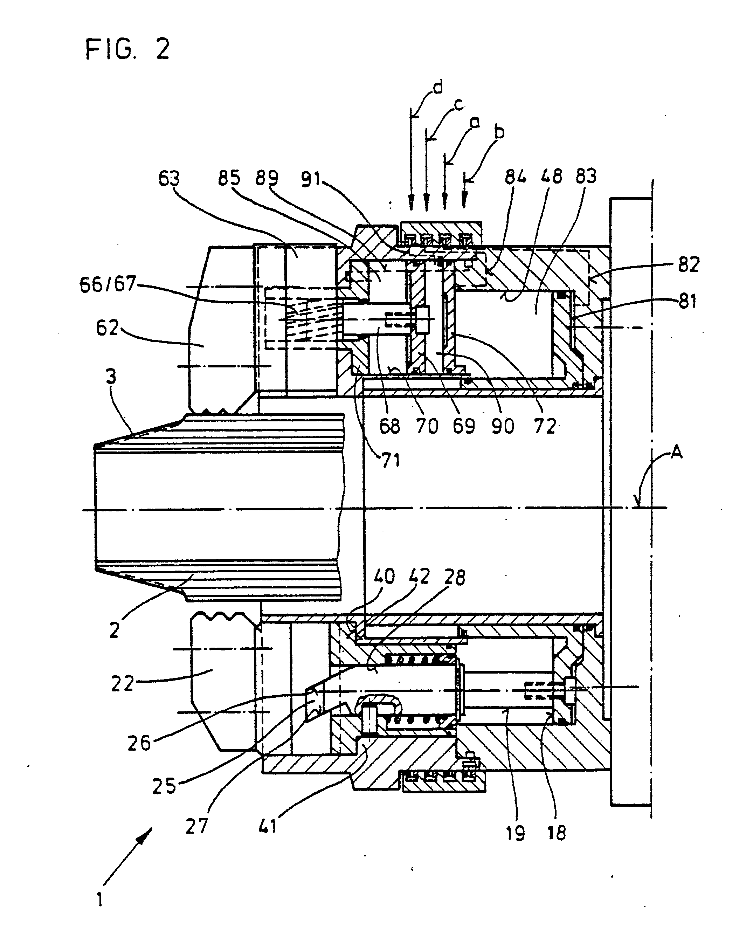

Das in den Fig. 1 und 2 dargestellte und jeweils mit 1 bezeichnete Spannfutter, das mittels Schrauben 5 an einer Werkzeugmaschine 4 befestigt ist, dient zur zentrischen Spannung eines ungleichmäßigen Werkstückes 2, beispielsweise eines Bohrrohres, in einem zentrisch zu bearbeitenden Bereich 6, der sich in einem wählbaren Abstand s vor dem eigentlichen Spannbereich 7 des Spannfutters 1 befindet. Nach der zentrischen Aufnahme des Werkstückes 2 in dessen Bereich 6 wird dieses in dem Bereich 7 ausgleichend gespannt, so daß unabhängig von einer Endkrümmung des Werkstückes 2 auf dieses, wie dies in Fig. 2 gezeigt ist, in dem Bereich 6 ein Gewinde 3 angebracht werden kann.

Zur zentrischen Aufnahme des Werkstückes 2 in dem Bereich 6 ist das Spannfutter 1 mit einem zentrischen Spannbackensatz 21 ausgestattet, dessen Spannbacken 22 gemeinsam axial und radial verstellbar sind, die ausgleichende Spannung wird mittels eines ebenfalls im Futterkörper 11 eingesetzten Ausgleichsbackensatzes 61 bewerkstelligt, dessen Spannbacken 62 mit Hilfe einer Ausgleichseinrichtung 60 betätigbar sind. Der Futterkörper 11 ist hierbei dreiteilig ausgebildet und besteht aus einem Grundkörper 12, einem diesen auf der Rückseite abschließenden winkelförmig gestalteten zylindrischen Deckel 13 und einer in diese eingesetzten Büchse 14.

Die Zentrierspannbacken 22 sind mittels Schrauben 24 in unterschiedlichen Lagen arretierbar an Grundbacken 23 befestigt, die jeweils radial verschiebbar in einem Spannkopf 16 eingesetzt sind, die wiederum gemeinsam axial verstellbar in dem Grundkörper 12 geführt sind. Dazu sind in dem Grundkörper 12 parallel zur Längsachse A des Spannfutters 1 gerichtete Ausnehmungen 15 eingearbeitet und die Spannköpfe 16 sind mit radial gerichteten Nuten 17 versehen, in denen die Grundbacken 23 verschiebbar gehalten sind.

Die Spannköpfe 16 und die Grundbacken 23 sind bei dem gezeigten Ausführungsbeispiel rotationssymmetrisch ausgebildet und weisen die gleichen Außendurchmesser auf, so daß sie gemeinsam bearbeitet, beispielsweise überschliffen werden können. Auch ist der Innendurchmesser der diese aufnehmenden Ausnehmungen 15 gleich groß gewählt, eine exakte Führung ist somit gegeben. Auch ist bei eingefahrenen Spannbacken 16 und Grundbacken 23 die Ausnehmung 15 verschlossen, so daß Schmutz nicht in diese eindringen kann.

Zur axialen Verstellung der Spannköpfe 16 sowie der Zentrierspannbacken 22 und der Grundbacken 23 ist ein als Ringkolben 46 ausgebildetes, beidseitig von Druckmittel beaufschlagbares Stellglied 18 vorgesehen, das in einem Ringraum 48 des Futterkörpers 11 eingesetzt und jeweils über ein als Stößel ausgebildetes Verbindungsglied 19 mit diesen koppelbar ist. Mittels eines im inneren Durchmesserbereich an dem Ringkolben 46 angeformten Ansatzes 47 ist das Stellglied 18, an dem mittels Schrauben 20 die Verbindungsglieder 19 befestigt sind, auf der Buchse 14 über einen großen Bereich abgestützt. Verkantungen sind auf diese Weise ausgeschlossen.

Um die axiale Verstellbewegung des Stellgliedes 18 in eine radiale Zustellbewegung der Grundbacken 23 und der mit diesen verbundenen Zentrierspannbacken 22 umzusenken, sind an den den Grundbacken 23 zugekehrten Enden der Verbindungsglieder 19, die die Spannköpfe 18 in zentrischen Ausnehmungen 28 durchgreifen, jeweils durch eine in Achsrichtung geneigt verlaufende Nase 31 gebildete Keilflächen 32 und 33 vorgesehen, und die Grundbacken 23 sind mit einer zugeordneten Nut 25 ausgestattet, deren Seitenwände Gegenflächen 26 und 27 bilden. Der Verstellweg der Nasen 31 in den Nuten 25 ist durch in den Spannköpfen 16 eingesetzten Anschlagstifte 30 begrenzt, die jeweils in eine in die Verbindungsglieder 19 eingearbeitete Freisparung 29 eingreifen. Auf diese Weise ist gewährleistet, daß die Nasen 31 bei der Rückstellbewegung der Spannköpfe 16 nicht aus den Nuten 25 herausgefahren werden.

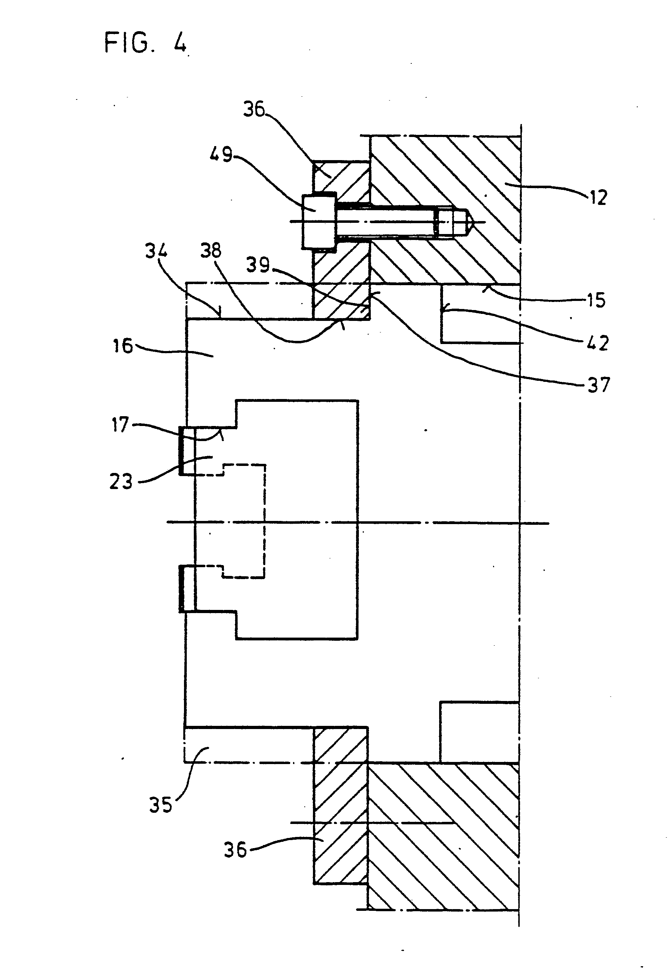

Die axiale Zustellbewegung der Spannköpfe 16 ist ebenfalls begrenzt. Um die Spannköpfe 16 jeweils in der vorderen Endposition zu arretieren, sind, wie dies im einzelnen der Fig. 4 zu entnehmen ist, auf den Grundkörper 12 im Bereich jeder der Ausnehmungen 15 zwei Anschlagleisten 36 mittels Schrauben 49 befestigt, die die Ausnehmungen 15 teilweise abdecken und somit Anschlagflächen 37 bilden. Und da an den Spannköpfen 16 Absätze 35 angearbeitet sind, durch die mit den Anschlagflächen 37 zusammenwirkende Gegenflächen 39 sowie axial verlaufende Führungsflächen 34 geschaffen sind, ist des weiteren auch eine verdrehfeste Halterung der Spannköpfe 16, da die Führungsflächen 34 sich an den Stirnflächen 38 der Anschlagleisten 36 abstützen, gegeben.

Die Spannköpfe 16 sind im Längsquerschnitt T-förmig ausgebildet und die diese aufnehmenden Ausnehmungen 15 sind mit einem Absatz 41 versehen, so daß auf diese Weise zusammenwirkende Anschlagflächen 40 und 42 gebildet sind, durch die somit die Rückstellbewegung der Spannköpfe 16 begrenzt ist. Da die Spannköpfe 16 in der Ausnehmung 15 und auch in deren abgesetzten Bereich 15' bei den Verstellbewegungen geführt sind, wird ein Verkanten vermieden.

Um eine Vormontage der Verbindungsglieder 19 und der Spannköpfe 16 zu ermöglichen und um eine vorzeitige radiale Verschiebung der Grundbacken 23, so lange diese sich noch in den Ausnehmungen 15 befinden, zu vermeiden, ist zwischen den Spannköpfen 16 und den Verbindungsgliedern 19 jeweils eine Druckfeder 44 eingesetzt. Die Feder 44 ist in einer in den Spannkopf 16 eingearbeiteten Freisparung 43 angeordnet und stützt sich an diesen und einem auf dem Verbindungsglied 19 aufgesetzten Ring 45 ab. Erst wenn durch Anlage der Spannköpfe 16 an den Anschlagleisten 36 die Vorspannkraft der Feder 44 überwunden wird, wird eine radiale Verstellung der Grundbacken 23 vorgenommen.

Die Ausgleichseinrichtung 60 besteht bei dem gezeigten Ausführungsbeispiel aus in Achsrichtung A des Spannfutters 1 verschiebbaren Antriebsgliedern 65, die über Schrägflächen 66 mit an den Grundbacken 63, die die Ausgleichsspannbacken 62 tragen, angebrachten Gegenflächen 67 zusammenwirken. Die Antriebsglieder 65 sind im Querschnitt rechteckig ausgebildet und beidseitig der in Nuten 64 des Grundkörpers 12 radial verschiebbar eingesetzten Grundbacken 63 angeordnet, wobei die Schrägflächen 66 an den den Grundbacken 63 zugekehrten Außenseiten angearbeitet sind.

Über eine parallel zur Längsachse A des Spannfutters 1 sich erstreckende Verlängerung 68 in Form einer Stange, die eine Büchse 71 durchgreift und in dieser verdrehfest geführt ist, ist an jedem der Antriebsglieder 65 ein beidseitig von Druckmittel beaufschlagbarer Stellkolben 69 befestigt, der verschiebbar in einer Ausnehmung 70 des Grundkörpers 12 geführt ist. Mittels Scheiben 72 sind die Ausnehmungen 70 druckdicht verschlossen.

Die Druckmittelzuführung in die dem Stellglied 18 zugeordneten Druckräume 81 und 83 sowie die den Stellkolben 69 zugeordneten Druckräume 85 und 90 erfolgt gesteuert mit Hilfe eines auf dem Futterkörper 11 angeordneten Druckmittelzuführungsringes 80, an den die Druckmittelzuführungsleitungen a, b, c und d angeschlossen sind, sowie in den Grundkörper 12 und den Deckel 13 eingearbeiteter Druckmittelzuführungskanäle 82 und 84 bzw. 86 und 91. Mit Hilfe eines Ringraumes 88, in dem der Druck durch ein in den Zuführungskanal 86 eingesetztes entsperrbares Rückschlagventil 87 auch bei abgeschalteter Druckmittelzuführung aufrechterhalten werden kann und der über Leitungen 89 mit allen Druckräumen 85 verbunden ist, ist die ausgleichende Einspannung zu bewerkstelligen.

Das Spannfutter 1 ermöglicht es somit, ein ungleichmäßiges Werkstück, beispielsweise ein meist mit einer unvermeidbaren Endkrümmung versehenes Bohrrohr in dem zu bearbeitenden Bereich 6 zentrisch zu spannen und in dieser Lage in einer anderen Ebene fest zu halten, um eine Bearbeitung des Bereiches 6 vornehmen zu können. Dies erfolgt in der Weise, daß nach dem Einbringen des Werkstückes 2 in das Spannfutter 1 die Zentrierspannbacken 22 des Zentrierspannbackensatzes 21 zunächst um den Verstellweg der Spannköpfe 16 axial verschoben und sodann radial in Richtung des Werkstückes 2 zugestellt werden, bis sie an diesem fest anliegen und dieses somit zentrieren.

Da die Zentrierspannbacken 22 gemeinsam verstellt werden, ist eine zentrische Aufnahme des Werkstückes 2 im Bereich 6 sichergestellt.

Die Zustellung der Spannköpfe 16 wird mit Hilfe des Stellgliedes 18 vorgenommen, in dem, ausgehend von der in Fig. 2 in der unteren Hälfte dargestellten Endlage, über die Druckmittelzuführungsleitung a und den Druckmittelkanal 82 dem Druckraum 81 Druckmittel zugeführt wird. Durch den sich in dem Druckraum 81 aufbauenden Druck wird das Stellglied 18 nach links verschoben. Über die an dem Stellglied 18 befestigten Verbindungsglieder 19 und die vorgespannte Druckfeder 44 wird die Verstellbewegung des Stellgliedes 18 auf die Spannköpfe 16 und über diese auf die aufgesetzten Grundbacken 23 übertragen. Bei dieser Verstellbewegung wird von den Keilflächen 32 keine Kraft auf die Grundbacken 23 ausgeübt, so daß eine erhöhte Reibungskraft durch Anlegen der Grundbacken 23 an die Innenwandung der Ausnehmung 15 nicht zu überwinden ist. Sobald sich jedoch die Spannköpfe 16 mit den Flächen 39 an den Anschlagflächen 37 der Anschlagleisten 36 anlegen und somit arretiert sind — in diesem Betriebszustand befinden sich die Grundbacken 23 außerhalb der Ausnehmungen 15 —, wird die axiale Verstellbewegung des Stellgliedes 19 über die Keilflächen 32 und die mit diesen zusammenwirkenden Gegenflächen 26 in eine radiale Zustellbewegung der Grundbacken 23 umgelenkt. Je nach Länge und Neigung der an den Verstellgliedern 19 angebrachten Nasen 31, durch die die Keilflächen 32 und 33 gebildet sind, ist der Verstellweg der Grundbacken 23 und damit auch der Zentrierspannbacken 22 sowie die Übersetzung der eingeleiteten, von dem Stellglied 18 ausgeübten Spannkraft beeinflußbar.

Ist das Werkstück 2, wie dies in Fig. 1 in der unteren Hälfte dargestellt ist, von dem Zentrierspannbacken 21 zentrisch aufgenommen, so wird dieses mit Hilfe des Ausgleichspannbackensatzes 61 in dem Bereich 7 ausgleichend gespannt. Dazu wird die Druckmittelzuführungsleitung b über den Druckmittelkanal 86 an den Ringraum 88 angeschlossen, so daß den Druckräumen 85 der Stellkolben 69 Druckmittel zuströmt. Dadurch werden die Stellkolben 69 und die mit diesen fest verbundenen Antriebsglieder 65 nach rechts verschoben. Die axiale Verstellbewegung der Antriebsglieder 65 wird jedoch über die Schrägflächen 66 und 67 in eine radiale Zustellbewegung der Grundbacken 63 und somit auch der Ausgleichsspannbacken 62 umgelenkt.

Die gemeinsame Zustellbewegung der Ausgleichsspannbacken 62 erfolgt jedoch nur so lange, bis einem der Ausgleichsspannbacken 62 durch Anlage an dem Werkstück 2 ein erhöhter Widerstand entgegengesetzt wird. Durch diesen Ausgleichsspannbacken wird aber noch keine erhöhte Spannkraft auf das Werkstück 2 ausgeübt, da die anderen Ausgleichsspannbacken weiterbewegt werden. Erst wenn sich alle Ausgleichsspannbacken 62 an dem Werkstück 2 abstützen, steigt der Druck in den Druckräumen 85 bis auf den vorgegebenen Wert an, so daß das Werkstück 2 zwischen den Ausgleichsspannbacken 62 eingespannt ist. Mittels des in den Druckmittelzuführungskanal 86 eingesetzten Rückschlagventils 87 bleibt der Druck in den Druckräumen 85 auch bei abgeschalteter Druckmittelzuführungsleitung b erhalten.

Die Einspannung des Werkstückes 2 ist hierbei jedoch nicht zentrisch, sondern entsprechend seiner Außenkontur, so daß eine sogenannte Ausgleichsspannung vorgenommen wurde. Das Werkstück 2 ist somit im Bereich 7 außermittig eingespannt, im Bereich 6 dagegen zentrisch ausgerichtet.

Nach der Arretierung des Werkstückes 2 mittels des Ausgleichsspannbackensatzes 61 werden die Zentrierspannbacken 22 in die in Fig. 2, untere Hälfte dargestellte Lage zurückgefahren. Dazu ist über die Druckmittelzuführungsleitung c und den Druckmittelkanal 84 dem Druckraum 83 Druckmittel zugeleitet, so daß das Stellglied 18 nach rechts verschoben wird. Über die Keilflächen 33 werden dabei zunächst die Grundbacken 23 radial verstellt und sodann zusammen mit den Spannköpfen 16 in den Ausnehmungen 15 ebenfalls nach rechts bewegt, bis diese an den Anschlagflächen 40 anliegen. Die in den Spannköpfen 16 eingesetzten und in die Freisparungen 29 der Verbindungsglieder 19 eingreifenden Anschlagstifte 30 verhindern dabei, daß die Nasen 31 gänzlich aus den Nuten 25 herausgefahren werden.

Bei zurückgezogenem Zentrierspannbackensatz 21 kann sodann das Werkstück 2 im Bereich 6 zentrisch bearbeitet werden, in dem dieses beispielsweise, wie dargestellt, mit einem konischen Gewinde 3 versehen wird.

Zum Lösen des Werkstückes 2 sind lediglich die Druckräume 90 über die Druckmittelkanäle 91 mit der Druckmittelzuführungsleitung d zu verbinden. Die Stellkolben 69 sowie die mit diesen fest verbundenen Antriebsglieder 65 werden dadurch nach links verschoben und deren axiale Bewegung wird über die Schrägflächen 66 und 67 derart umgelenkt, daß die Ausgleichsspannbacken 62 radial nach außen verschoben werden und die Einspannung des Werkstückes 2 somit aufgehoben ist.

Selbstverständlich ist, damit jeweils eine Verstellbewegung vorgenommen werden kann, bei einer Druckmittelzuführung in einen der Druckräume 81, 82, 85 oder 90 der zugeordnete gegenüberliegende Druckraum zu entlüften. Auch kann die Ausgleicheinrichtung 60, um eine ausgleichende Einspannung des Werkstückes 2 in dem Bereich 7 vorzunehmen, in anderer Weise als dargestellt ausgebildet werden. Des weiteren ist es möglich, den Abstand s zwischen den Bereichen 6 und 7 zu verändern, in dem anstelle der Anschlagleisten 36 axial gerichtete Stellschrauben zur Arretierung der Spannköpfe 16 in der vorderen Endlage vorgesehen werden. Die Stellschrauben sowie gegebenenfalls auch die in Ausnehmungen einzusetzenden Anschlagleisten 36 können nämlich mehr oder weniger tief eingeschraubt bzw. angeordnet werden, so daß der Verstellweg der Spannköpfe 16 einstellbar ist.

**Patentansprüche**

1. Spannfutter für Drehmaschinen oder ähnliche Werkzeugmaschinen mit einem über eine Ausgleichseinrichtung (60) zur Anpassung an ungleichmäßige Werkstücke (6) betätigbaren Ausgleichsspannbackensatz (61) und einem unabhängig davon betätigbaren Zentrier-Spannbackensatz (21), dessen Spannbacken (22) in axialem Abstand von den Ausgleichsspannbacken (62) an der Außenfläche des einzuspannenden Werkstückes angreifen und aus dem Zentrierbereich zurückziehbar sind, dadurch gekennzeichnet, daß die Spannbacken (22) des Zentrier-Spannbackensatzes (21) unmittelbar oder über Grundbacken (23) jeweils senkrecht zur Längsachse (A) des Spannfutters (1) verstellbar in einen Spannkopf (16) geführt sind, der in einer in den Futterkörper (11) eingearbeitete Ausnehmung (15) axial begrenzt verschiebbar gehalten ist, daß die Zentrierspannbacken (22) oder Grundbacken (23) und die diesen zugeordneten Spannköpfe (16) über ein als Stößel ausgebildetes achsparallel zur Längsachse (A) des Spannfutters (1) angeordnetes Verbindungsglied (19) mit einem gemeinsamen Stellglied (18) koppelbar sind und daß die Verbindungsglieder (19) in dem in die Zentrierspannbacken (22) oder Grundbacken (23) eingreifenden Bereich mit in Achsrichtung geneigten Keilflächen (32, 33) versehen sind, mittels denen die axiale Verstellbewegung des Stellgliedes (18) bei in der vorderen Endstellungarretierten Spannköpfen (16) über an den Zentrierspannbacken (22) oder Grundbacken (23) angebrachte Gegenflächen (26, 27) in gemeinsame radial gerichtete Zustellbewegungen umlenkbar ist.

2. Spannfutter nach Anspruch 1, dadurch gekennzeichnet, daß die Verbindungsglieder (19) die diesen zugeordneten Spannköpfe (16) jeweils in einer in diese eingearbeiteten zentrischen Ausnehmung (28) durchgreifen.

3. Spannfutter nach Anspruch 1 oder 2, dadurch gekennzeichnet, daß die zur radialen Verstellung der Zentrierspannbacken (22) oder Grundbacken (23) vorgesehenen Keilflächen (32, 33) durch eine an dem diesem zugekehrten Ende des Verbindungsgliedes (19) angebrachte in Achsrichtung geneigt verlaufende Nase (31) gebildet sind, die jeweils in eine in die Zentrierspannbacken (22) oder Grundbacken (23) eingearbeitete zugeordnete Nut (25) eingreifen.

4. Spannfutter nach einem oder mehreren der Ansprüche 1 bis 3, dadurch gekennzeichnet, daß die Spannköpfe (16) und die in diese eingesetzten Grundbacken (23) zylinderförmig mit vorzugsweise gleichem Außendurchmesser und die diese aufnehmenden Ausnehmungen (15) als zylindrische Bohrungen ausgebildet sind.

5. Spannfutter nach einem oder mehreren der Ansprüche 1 bis 4, dadurch gekennzeichnet, daß zur verdrehfesten Halterung der Spannköpfe (16) diese mit vorzugsweise jeweils zwei diametral einander gegenüberliegenden angeordneten achsparallel verlaufenden Führungsflächen (34) versehen sind, die an an dem Futterkörper (11) angebrachten Gegenflächen (38) anliegen.

6. Spannfutter nach einem oder mehreren der Ansprüche 1 bis 5, dadurch gekennzeichnet, daß der Verstellweg der Spannköpfe (16) zumindest in Zustellrichtung durch einen an dem Futterkörper (11) angebrachten Anschlag (Anschlagflächen 37, 40) begrenzt ist.

7. Spannfutter nach Anspruch 6, dadurch gekennzeichnet, daß die die Zustellbewegung der Spannköpfe (16) begrenzenden Anschläge (Anschlagfläche 37) durch auf der Stirnseite des Spannfutters (Grundkörper 12) angeordnete die die Spannköpfe (16) aufnehmenden Ausnehmungen (15) ein- oder beidseitig teilweise abdeckende, vorzugsweise axial verstellbare Anschlagleisten (36) oder Stellschrauben gebildet sind, mit denen an den Spannköpfen (16) beispielsweise durch Absätze (35) gebildete Anschlagflächen (39) zusammenwirken.

8. Spannfutter nach Anspruch 5 oder 7, dadurch gekennzeichnet, daß die mit den Führungsflächen (34) der Spannköpfe (16) zusammenwirkenden Gegenflächen (38) durch die Anschlagleisten (36) gebildet sind.

9. Spannfutter nach Anspruch 6, dadurch gekennzeichnet, daß die die Rückstellbewegung der Spannköpfe (16) begrenzenden Anschläge (Anschlagfläche 40) jeweils durch einen in der diese aufnehmenden Ausnehmung (15) vorgesehenen Absatz (41) gebildet sind, mit dem der im Längsschnitt vorzugsweise T-förmig ausgebildete Spannkopf (16) mit einer Anschlagfläche (42) zusammenwirkt.

10. Spannfutter nach einem oder mehreren der Ansprüche 1 bis 9, dadurch gekennzeichnet, daß zur Begrenzung der Rückstellbewegung der Zentrierspannbacken (22) die Verbindungsglieder (19) mit einer in Achsrichtung verlaufenden Freisparung (29) und der zugeordnete Spannkopf (16) mit einem Anschlagstift (30) versehen sind, der in die Freisparung (29) eingreift.

11. Spannfutter nach einem oder mehreren der Ansprüche 1 bis 10, dadurch gekennzeichnet, daß die Verbindungsglieder (19) jeweils über eine vorzugsweise vorgespannte Feder (44) mit dem zugeordneten Spannkopf (16) verbunden sind.

12. Spannfutter nach Anspruch 11, dadurch gekennzeichnet, daß die Feder (44) jeweils in einer in die Spannköpfe (16) eingearbeiteten ringnutförmigen Freisparung (43) eingesetzt und an diesen und den Verbindungsgliedern (19) abgestützt ist.

13. Spannfutter nach einem oder mehreren der Ansprüche 1 bis 12, dadurch gekennzeichnet, daß als Stellglied (18) ein beidseitig von Druckmittel beaufschlagbarer axial verschiebbar in dem Futterkörper (11) angeordneter Stellkolben vorgesehen ist.

14. Spannfutter nach Anspruch 13, dadurch gekennzeichnet, daß das Stellglied (18) als Ringkolben (46) mit zumindest einem von diesem im inneren oder äußeren Bereich axial abstehenden rohrförmigen Ansatz (46) ausgebildet ist, der in dem Futterkörper (11) geführt ist.

**Claims**

1. Chuck for turning machines or similar machine tool having an adjustment clamping chuck set (61) actuated by means of an adapting device (60) for the adaptation of non-uniform work-pieces (6) and an independent operable centering claw-set (21), the claws (22) of which abute the outer surface of the work-piece in axial distance from the adjustment claws (62) and which claws are retractable from the centering area, characterized in that the claws (22) of the centering claw set (21) are adjustably guided in a clamping head (16) directly or by means of general claws (23) perpendicular to the longitudinal axis (A) of the chuck (1) respectively, which clamping head is limited axially shiftably held in an opening (15) in the chuck body (11), that the claws (22) or the general claws (23) and the clamping heads (16) assigned to them may be connected part (19) being designed as a plunger parallel to the axis (A) of the chuck, and that the connector parts (19) in the area reaching to the claws (22) or the general claws (23) have wedge-shaped surfaces (32, 33) by means of which the axially directed adjustment motion of the common actuator (18) is turnable back into common radialy directed motions by means of counter surfaces (26, 27) at the claws (22) or general claws (23).

2. Chuck of claim 1, characterized in that the connector parts (19) extend through respective centrically positioned opening (28) in the clamping heads (16).

3. Chuck of claim 1 or 2, characterized in that the wedge-shaped surfaces (32, 33) for the radial motion of the claws (22) or general claws (23) are formed by a projection (31) inclined in the direction of the axis and mounted to the end of the connector part (19) facing the general claws and extending into a groove (25) in the claws (22) or general claws (23).

4. Chuck of one or more of the claims 1 through 3, characterized in that the clamping heads (16) and the general claws (23) inserted therein have cylindrical shape with preferably same outer diameter and that the openings (15) taking over the general claws are shaped as cylindrical bores.

5. Chuck of one or more of the claims 1 through 4, characterized in that for torsional strength of the clamping heads (16) same are preferably provided with two diametrical parallel to the axis located guide surfaces (34) resting against counter surfaces (38) mounted to the chuck body (11).

6. Chuck of one or more of the claims 1 through 5, characterized in that the free space for the motion of the clamping heads (16) at least in the direction of their motion is limited by a stop (stop surfaces 37, 40) mounted to the chuck body.

7. Chuck of claim 6, characterized in that the stops (stop surfaces 37) limiting the motion of the clamping heads (16) are formed by stop edges (36) or adjustment screws preferably being axially adjustable and located at the front side of the chuck (main body 12) and partly covering the openings (15) taking over the clamping heads (16), which stop edges or adjustment screws cooperate with stop surfaces (39) formed by recesses (35) at the clamping heads (16).

8. Chuck of claim 1 or 7, characterized in that the counter surfaces (38) co-operating with the guide surfaces (34) of the clamping heads (16) are formed by the stop edges (36).

9. Chuck of claim 6, characterized in that the stops (stop surfaces 40) limiting the return motion of the clamping heads (16) are formed by a recess (41) respectively located in the opening (15) containing the clamping heads, with which recess the clamping head (16) having lengthwise a T-shape is co-operating by means of a stop surface (42).

10. Chuck of one or more of the claims 1 through 9, characterized in that for the limitation of the backwards directed motion of the claws (22) the connector parts (19) are provided with an opening (29) oriented in the direction of the axis, and the clamping head (16) adjoined therewith is provided with a stop pin (30) extending into the opening (29).

11. Chuck of one or more of the claims 1 through 10, characterized in that the connector parts (19) are connected to the clamping head (16) adjoined therewith preferably by means of a biased spring (44) respectively.

12. Chuck of Claim 11, characterized in that the spring (44) is inserted into a ring-shaped recess (43) in the clamping heads (16) respectively and rests against said recess and against the connector parts (19).

13. Chuck of one or more of the claims 1 through 12, characterized in that an adjustment piston guided axially shiftable in the chuck body (11) and faced by pressure fluid an both sides and used as an adjustment member (18).

14. Chuck of claim 13, characterized in that the adjustment member (18) is designed as a ring-shaped piston (46) having at least one tube-shaped extension (47) axially extending therefrom in the inner or outer area, which extension is guided in the chuck body (11).

**Revendications**

1. Mandrin de serrage pour tours ou machines-outils similaires avec un jeu de mâchoires de serrage de compensation (61) commandé par un équipement de compensation (60), pour l'adaptation à des pièces (6) de forme irrégulière ainsi qu'un jeu de mâchoires de serrage de centrage (21) pouvant être actionné indépendamment, dont les mâchoires de serrage (22) sont en prise, à un écartement axial des mâchoires de serrage de compensation (62), sur la face extérieure de la pièce à serrer et qui sont rétractables de la zone de centrage, ainsi désigné, de sorte que, les mâchoires de serrage (22) du jeu de mâchoires de serrage de centrage (21) sont guidées dans une tête de serrage (16) ajustable directement ou sur les mâchoires de base (23), verticalement par rapport à l'axe longitudinal (A) du mandrin de serrage (1) qui peut être déplacé axialement, de façon limitée, dans un évidement (15) usiné dans le corps du mandrin (11), de sorte que les mâchoires de serrage de centrage (22) ou les mâchoires de base (23) et les têtes de serrage (16) de celles-ci sont coupables à l'aide d'un élément de raccordement (19) et un élément de réglage commun (18) parallèlement à l'axe longitudinal (A) et, de sorte que, les éléments de raccordement (19) sont munis de surfaces à clavette (32, 33) appropriées, dans le sens de l'axe, sont en prise dans les mâchoires de serrage de centrage (22) ou les mâchoires de base (23), au moyen desquelles le mouvement de déplacement axial de l'élément de réglage (18) est déviable aux têtes de serrage (16) arrêtées dans la position finale, à l'aide des contre-appuis (26, 27) placés sur les mâchoires de serrage de centrage (22) ou les mâchoires de base (23), en des mouvements d'avance communs dirigés radialement.

2. Mandrin de serrage, selon le droit 1, ainsi désigné, de sorte que, les éléments de raccordement (19) qui saisissent ces têtes de serrage (16) dans un évidement concentrique (28) usiné dans celles-ci.

3. Mandrin de serrage, selon le droit 1 ou 2, ainsi désigné, de sorte que, les surfaces à clavette prévues (32, 33) sont conçues pour le réglage radial des mâchoires de serrage de centrage (22) ou mâchoires de base (23), à l'aide d'un nez (31) à allure inclinée dans le sens de l'axe placé à l'extrémité opposée de l'élément de raccordement (19), qui sont en prise dans une gorge (25) usinée dans les mâchoires de serrage de centrage (22) ou les mâchoires de base (23).

4. Mandrin de serrage, selon un ou plusieurs des droits 1 à 3, ainsi désigné, de sorte que, les têtes de serrage (16) et les mâchoires de base (23) insérées dans celles-ci et les évidements (15) sont conçus de forme cylindrique avec diamètre extérieur, de préférence identique, en tant que perçage cylindrique.

5. Mandrin de serrage, selon un ou plusieurs des droits 1 à 4, ainsi désigné, de sorte que pour le maintien des têtes de serrage (16), celles-ci sont munies de deux surfaces de guidage (34) à déroulement parallèle à l'axe, diamétralement opposées l'une par rapport à l'autre, qui portent sur les contre-surfaces (38) sur le corps du mandrin (11).

6. Mandrin de serrage, selon un ou plusieurs des droits 1 à 5, ainsi désigné, de sorte que, la course de réglage des têtes de serrage (16) soit limitée, au moins dans le sens d'avance, par une butée placée sur le corps du mandrin (11), (surfaces de butée 37, 40).

7. Mandrin de serrage, selon le droit 6, ainsi désigné, de sorte que, les butées (surface de butée 37) limitant le mouvement d'avance des têtes de serrage (16), à l'aide des évidements prenants (15) sur le côté frontal du mandrin de serrage (corps de base 12) qui recouvrent partiellement d'un ou de deux côtés les têtes de serrage (16). Les barres de butée (36) ou les vis de réglage sont conçues de préférence réglables axialement. Ces barres de butée avec les surfaces de butée (39) formées par les talons (35) placés sur les têtes de serrage (35).

8. Mandrin de serrage, selon le droit 5 ou 7, ainsi désigné, de sorte que les contre-surfaces (38) agissant avec les surfaces de guidage (34) des têtes de serrage (16), sont formées par les barres de butée (36).

9. Mandrin de serrage, selon le droit 6, ainsi désigné, de sorte que, les butées (surface de portée 40) limitant le mouvement de rappel des têtes de serrage (16) sont formées par un talon (41) prévu dans l'évidement de celles-ci, qui agit avec une face de butée (42) avec la tête de serrage (16) conçue de préférence en forme de T, en coupe longitudinale.

10. Mandrin de serrage, selon un ou plusieurs des droits 1 à 9, ainsi désigné, de sorte que, pour la limitation du mouvement de rappel des mâchoires de serrage de centrage (22), les éléments de raccordement (19), avec une cavité (29) se déroulant dans le sens de l'axe et la tête de serrage (16) sont munis d'une goupille de butée (30) qui est en prise dans la cavité (29).

11. Mandrin de serrage, selon un ou plusieurs des droits 1 à 10, ainsi désigné, de sorte que, les éléments de raccordement (19) soient reliés avec la tête de serrage (16) adéquate, de préférence, à l'aide d'un ressort (44) précomprimé.

12. Mandrin de serrrage, selon le droit 11, ainsi désigné, de sorte que le ressort (44) soit inséré dans une cavité circulaire (43) usinée dans les têtes de serrage (16) et soit appuyé à celui-ci et aux éléments de raccordement (19).

13. Mandrin de serrage, selon un ou plusieurs des droits 1 à 12, ainsi désigné, de sorte, qu'en tant qu'élément de réglage (18), il est prévu un piston de réglage, dans le corps du mandrin (11), déplaçable axialement, soumis à la pression hydraulique des deux côtés.

14. Mandrin de serrage, selon le droit 13, ainsi désigné, de sorte que l'élément de réglage (18) est conçu en tant que piston (46) avec au moins un talon (46) de forme tubulaire dépassant axialement de celui-ci dans la partie intérieure ou extérieure et qui est guidé dans le corps du mandrin (11).

FIG. 1

# FIG. 2

FIG. 3

FIG. 4